# FASCICULE DE BREVET EUROPEEN

(11) **EP 3 635 199 B1**
(45) Date de publication et mention de la délivrance du brevet: **10.09.2025**
(21) Numéro de dépôt: 18727035.0
(22) Date de dépôt: 04.06.2018
(51) Int. Cl.: E04H 5/04, H02B 5/00, H02J 3/38

(54) **SOUS-STATION ÉLECTRIQUE, INSTALLATION ET PROCÉDÉ DE MISE EN PLACE**
ELEKTRISCHE UMSPANNSTATION, ANLAGE UND AUFBAUVERFAHREN
ELECTRICAL SUBSTATION, INSTALLATION AND SETTING UP METHOD

(30) Priorité: 06.06.2017 FR 1755010
(43) Date de publication de la demande: 15.04.2020
(73) Titulaire: Chantiers de l'Atlantique, 44600 Saint-Nazaire (FR)
(72) Inventeur: COULON, Eric, 44730 Saint Michel Chef Chef (FR); GAZEAU, James, 44320 Chaumes en Retz (FR); SIMARD, Antoine, 56130 Camoel (FR)
(74) Mandataire: Regimbeau
(86) Numéro de dépôt international: PCT/EP2018/064597
(87) Numéro de publication internationale: WO 2018/224430

(56) Documents cités:
- EP-A1- 2 811 160
- WO-A1-2011/120591
- WO-A1-2012/144884
- CN-B- 104 631 410
- CN-U- 203 942 186
- CN-U- 204 126 320
- CN-U- 204 456 043
- "THE TW 2.0 OFFSHORE TECHNICAL DESCRIPTION", SUSTAIN. THE WORLD SUSTAINABLE ENERGY FAIR, XX, XX, 15 May 1999 (1999-05-15), pages 1 - 36, XP001059295
- "THE TW 2.0 OFFSHORE TECHNICAL DESCRIPTION", SUSTAIN. THE WORLD SUSTAINABLE ENERGY FAIR, XX, XX, 15 May 1999 (1999-05-15), pages 1 - 36, XP001059295

## Description

### DOMAINE DE L'INVENTION

La présente invention se rapporte notamment à une sous-station électrique de champ éolien qui est configurée pour élever ou abaisser la tension de l'électricité produite par des éoliennes et pour permettre son transport avec un minimum de perte jusqu'à un réseau électrique (connu sous l'acronyme anglo-saxon "GRID") de distribution. L'invention s'applique de manière avantageuse à la production d'énergie à terre (c'est-à-dire "onshore") ou en mer (c'est-à-dire "offshore").

Le domaine des applications "offshore" sera plus particulièrement détaillé ci-après.

### ARRIERE PLAN TECHNOLOGIQUE DE L'INVENTION

Un champ éolien "offshore" est constitué d'un nombre variable d'éoliennes. La puissance unitaire de ces dernières est également variable. On parle souvent de la puissance totale du champ éolien qui est exprimée en Mégawatts (MW) et dont la plage varie couramment de 200MW à 900MW.

Pour être transportée avec un rendement optimal (réduction des pertes entre le départ et l'arrivée), il est nécessaire d'élever la tension électrique (33kV/220kV par exemple). Un poste de transformation ou sous-station électrique (en anglais "OSS" pour "Offshore Sub-Station") est donc nécessaire. Elle est principalement constituée d'au moins un transformateur et de tous les équipements nécessaires à son bon fonctionnement, sa maintenance, son contrôle, sa sécurité, sa connexion au réseau et son accès à bord.

La période actuelle dite de "transition énergétique" se caractérise essentiellement par le fait que l'on tend à produire de plus en plus l'électricité à partir de sources renouvelables (vent, courant, marée, soleil,...), en remplacement de sources fossiles et/ou polluantes (pétrole, charbon, nucléaire).

Cette transition énergétique ne sera possible que si des solutions industrielles robustes sont proposées sur le marché et permettent d'être compétitives avec les énergies actuelles. Ainsi, on compare le coût des énergies entre elles par le LCOE (acronyme anglais de "Levelized Cost of Energy", signifiant "coût actualisé de l'énergie".), en €/kWh.

Le marché s'attend donc à une baisse importante du coût de l'énergie venant de l'éolien "offshore".

Une sous-station comporte en général une structure, généralement de type "mécano-soudée", des équipements électriques (tableaux blindés connus sous l'acronyme "GIS", transformateurs,...), des équipements de levage, de lutte contre les incendies, de production d'énergie pour ses besoins propres supplémentaires (fonctionnement d'une grue, etc.) et des éléments de structure secondaire (escaliers, échelles, etc.).

Le domaine de l'éolien offshore se caractérise principalement par :
> l'utilisation de turbines très puissantes (puissance > 5MW) engendrant des puissances de plus en plus importantes ;
> un nombre très important d'éoliennes (> 50 éoliennes) ;
> des moyens conséquents pour le transport et l'installation en mer ;
> des conditions environnementales très sévères (sol, houle, courant, vent, etc.) ;
> des exigences réglementaires plus sévères que dans le domaine terrestre (tenue à la fatigue, sécurité, ...) ;
> des conditions d'utilisation très exigeantes (difficulté de maintenance, accès, manutention, ...).

La pratique actuelle de construction des sous-stations consiste à concevoir des sous-stations électriques propres à chaque client et chaque site à équiper. Ainsi, chaque sous-station possède ses propres caractéristiques en termes d'architecture, de puissance, de masse et de dimensions. Chaque sous-station nouvellement construite est donc, en quelque sorte, un "prototype".

Pour concevoir de tels ensembles et tout en cherchant à réduire les coûts, l'Homme de l'Art peut s'appuyer sur le document GB 253 217.

Ce document propose de réaliser des gains en "intégrant" la sous-station sur une fondation d'éolienne, en supprimant ainsi la fondation additionnelle sur laquelle repose la sous-station. Toutefois, cette solution présente des limites notamment en termes de masse. Il est en effet difficile d'adjoindre à une fondation déjà soumise à des efforts importants provenant de l'éolienne, un équipement supplémentaire qui engendre des efforts supplémentaires. Pour réduire ces derniers, l'Homme de l'Art devra inévitablement limiter les équipements électriques ou renforcer significativement la fondation de l'éolienne.

Cela limite obligatoirement les cas d'utilisation d'une telle solution et au mieux viendrait à multiplier de manière importante le nombre d'équipements qui devront être ajoutés sur les fondations d'éolienne. On peut alors remettre en question l'intérêt de cette solution pour l'Homme de l'Art.

L'état de la technique dans ce domaine peut également être illustré par : WO 2011/120591, WO 2012/144884, CN 204 126 320, CN 104 631 410, CN 203 942 186, CN 204 456 043, "THE TW 2.0 OFFSHORE TECHNICAL DESCRIPTION", SUSTAIN. THE WORDL SUSTAINABLE ENERGY FAIR (1999-05-15) et EP 2811160.

La présente invention vise à apporter une solution à ce problème en rationnalisant la construction des sous-stations électriques en en réduisant le coût global, sans que cela ait la moindre répercussion en termes d'équipements que renferme habituellement une telle sous-station, ainsi qu'en termes de paramètres de sécurité et de maintenance notamment.

### RESUME DE L'INVENTION

Ainsi, la présente invention se rapporte principalement à une sous-station électrique de champ éolien, qui est configurée pour élever ou abaisser la tension de l'électricité produite par des éoliennes dudit champ éolien afin d'assurer son transport jusqu'à un réseau électrique de distribution,
caractérisée par le fait qu'elle comporte n modules, n étant un nombre entier au moins égal à 2, ces modules, qui comportent chacun un agencement de plusieurs pièces, présentant une forme et des dimensions extérieures identiques, chaque module renfermant au moins un transformateur électrique configuré pour élever ou abaisser ladite tension, ces modules étant reliés les uns aux autres de manière à être en mesure de fournir audit réseau une puissance électrique globale égale à la somme des puissances de chaque transformateur.

L'idée technique de base est de proposer une sous-station électrique composée de n modules unitaires standardisés.

Chaque module unitaire standardisé est conçu pour résister aux différentes sollicitations qu'il rencontrera lors de ses phases de vie (sur site en fonctionnement, en cours de transport, en cours d'installation, en tenant compte des situations les plus défavorables permettant ainsi sa certification préalable).

Avantageusement, le module reçoit tous les types d'équipements et auxiliaires associés et est conçu pour être fabriqué selon un processus de fabrication en série.

Le résultat est une sous-station qui répond pleinement aux exigences actuelles et à venir des clients.

Selon d'autres caractéristiques avantageuses et non limitatives de cette sous-station :
- ledit agencement est le même d'un module à l'autre ;
- les agencements d'un premier et d'un deuxième modules sont inversés, de sorte que lorsqu'ils sont positionnés l'un à côté de l'autre, tout ou partie de leurs pièces respectives sont symétriques ;
- chaque module est également pourvu d'au moins un équipement de la liste suivante : un poste blindé haute ou moyenne tension (en anglais "Gas Insulated Switchgear"), un tableau d'alimentation à basse tension, un système de stockage d'énergie pour une alimentation électrique de secours, un système de refroidissement de l'air ambiant, un système de détection et de lutte contre l'incendie, un local de refuge ;
- la puissance de chaque transformateur est comprise entre 150 et 400 MW ;
- lesdits transformateurs présentent une puissance identique ;
- au moins un transformateur présente une puissance différente de celle des autres transformateurs ;
- l'un desdits modules est pourvu d'un transformateur redondant, c'est à dire configuré pour être mis en service seulement en cas de défaillance du transformateur T de l'un des autres modules.

Un autre aspect de l'invention se rapporte à une installation qui comporte une pluralité d'éoliennes et au moins une sous-station selon l'une des caractéristiques précédentes.

Selon des caractéristiques particulières de cette installation :
- ladite sous-station est installée "onshore", c'est-à-dire à terre ;
- ladite sous-station est installée "offshore", c'est-à-dire au large des côtes ;
- ladite sous-station repose sur une fondation, sur un support flottant, ou sur le fond marin ;
- ladite sous-station repose sur une fondation de type "jacket" ou monopile ;
- les modules de ladite sous-station sont installés sur un même support ou sur au moins deux supports ;
- au moins un module de ladite sous-station est installé "onshore", c'est-à-dire à terre, tandis que l'autre (les autres) module(s) est (sont) installé(s) offshore, c'est à dire au large des côtes.

Enfin, un dernier aspect de l'invention concerne un procédé de mise en place sur un site "offshore" d'une sous-station selon l'une des caractéristiques énumérées plus haut.

Selon des caractéristiques particulières de ce procédé :
- on relie lesdits modules à terre et on transporte et installe l'ensemble de ces modules sur ledit site ;
- on transporte et installe chacun desdits modules individuellement et on procède à leur liaison sur ledit site.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue simplifiée en perspective de trois exemples de réalisation d'une sous-station conforme à l'invention ;
- la figure 2 est une vue en perspective d'un exemple de réalisation d'un module qui fait partie intégrante de la sous-station de l'invention ;
- la figure 3 est une vue analogue à la précédente, le module étant représenté alors qu'il est pourvu d'équipements supplémentaires optionnels ;
- la figure 4 est aussi une vue en perspective du module de la figure 3, vu selon une direction différente ;
- la figure 5 est une vue en perspective d'une sous-station comportant deux modules tels que celui représenté à la figure 2;
- la figure 6 est une vue analogue à la précédente, les modules étant pourvus desdits équipements supplémentaires ;
- les figures 7 et 8 sont des vues analogues aux figures 5 et 6 respectivement, le nombre de modules étant ici égal à trois ;
- la figure 9 est un schéma montrant, vu de dessus, l'agencement des pièces d'un module ;
- les figures 10 et 11 sont des schémas montrant, vu de dessus, l'agencement des pièces d'une sous-station comportant deux, respectivement trois modules.

### DESCRIPTION DETAILLEE DE L'INVENTION

Comme indiqué plus haut, la présente description est donnée plus particulièrement en relation avec le domaine des applications « offshore », c'est à dire dans laquelle la sous-station selon l'invention est située au large des côtes.

Toutefois, sauf mention contraire, ce qui sera dit ci-après vaut également pour une application dans laquelle la sous-station de l'invention est située à terre, c'est à dire "onshore".

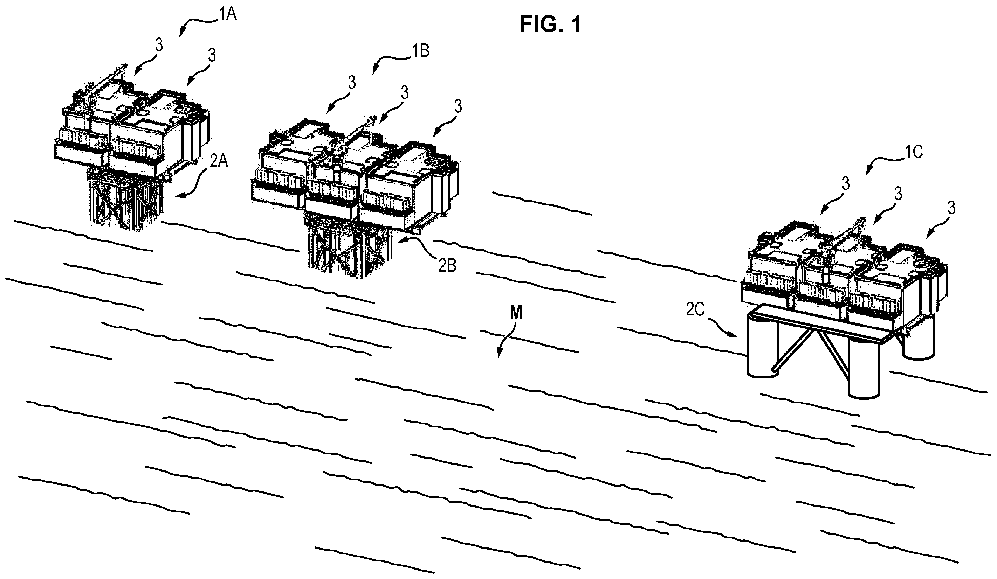

A la figure 1 annexée sont représentées trois sous-stations 1A, 1B et 1C conformes à la présente invention.

Ces sous-stations sont installées "offshore", c'est à dire au large des côtes et à proximité d'un champ d'éoliennes, lesquelles n'ont pas été représentées pour une meilleure lecture de la figure.

La sous-station 1A visible sur la gauche de la figure comporte deux modules 3 qui reposent sur une plateforme, elle-même située au sommet d'une fondation 2A que l'on appelle couramment, en termes du métier "jacket". De manière usuelle, la hauteur de cette plateforme est suffisante pour que la sous-station soit largement au-dessus du niveau de la mer M.

Le terme "jacket" est couramment utilisé pour désigner une fondation de type "pylône". Elle est généralement constituée d'un ensemble de quatre pieds qui se prolongent vers le haut, chacun par une jambe présentant une même orientation oblique formant un angle aigu par rapport à la verticale, de manière à former un ensemble ressemblant à la structure d'un derrick.

La sous-station 1B qui est visible au milieu de cette figure est du même type que la précédente, mais s'en différencie toutefois par le fait qu'elle comporte non pas deux mais trois modules 3 du même type que ceux de la sous-station 1A. La fondation 2B est du même type que la fondation 2A.

Quant à la sous-station 1C qui comporte également trois modules 3, elle comporte une fondation 2C de type flottant prévue pour être installée dans des fonds de plus grande profondeur. L'homme du métier saura choisir la fondation la plus appropriée.

Dans un mode de réalisation non représenté, la sous-station peut reposer directement sur le fond marin.

Bien entendu, le nombre de modules n'est pas limité à deux ou trois (comme c'est le cas dans le cadre de la figure 1). Il peut être supérieur.

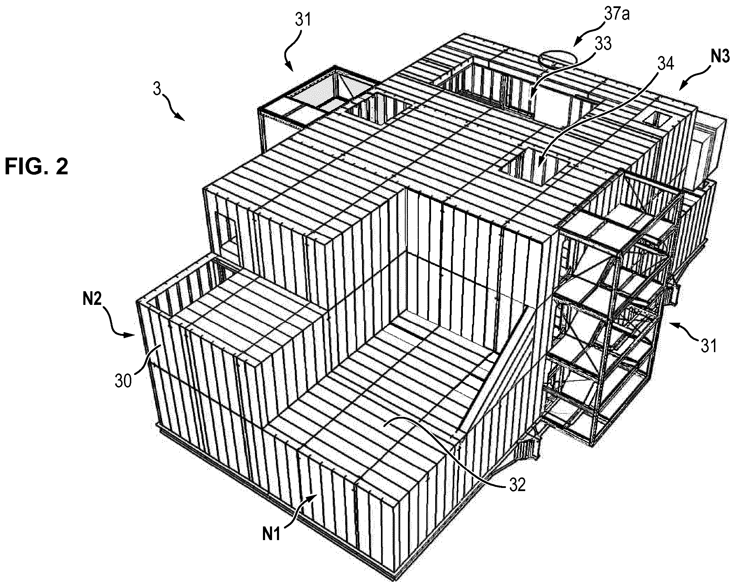

A la figure 2 est représenté un exemple possible de réalisation d'un module 3 constitutif de la sous-station de l'invention.

Bien entendu, il s'agit d'un simple exemple de réalisation, de sorte que d'autres formes de modules peuvent être envisagées.

Le module représenté ici s'inscrit dans un parallélépipède rectangle. Il est formé essentiellement d'une structure métallique 30 constituée de tôles, de raidisseurs et de profilés. Une telle structure est particulièrement performante, notamment en matière de rigidité.

Ici, le module est organisé sur trois niveaux ou étages N1, N2 et N3. Bien entendu, ce nombre pourrait être différent (inférieur ou supérieur).

L'agencement intérieur d'un tel module sera précisé plus loin dans la description.

Sur la figure 2, on note la présence de deux escaliers 31 qui sont placés de part et d'autre du module 3 et qui permettent aux opérateurs de se déplacer indifféremment d'un niveau à l'autre.

Dans l'exemple représenté, les niveaux N2 et N3 occupent une surface inférieure à celle du niveau inférieur N1, de façon à dégager à la surface supérieur de celui-ci une plateforme 32.

On note aussi la présence de trappes de maintenance 33 et 34 qui débouchent à la surface supérieure du niveau le plus élevé. Ces trappes de maintenance seront fermées en utilisation par des panneaux non représentés.

On note également la présence d'un support de grue 37a.

A titre purement indicatif, un tel module 3 peut présenter les dimensions suivantes :
- longueur : 29,5 mètres ;
- largeur (non compris les escaliers 31) : 14 mètres ;
- hauteur : 12 mètres.

Quant à son poids, considéré alors que le module est aménagé et équipés de tous les appareils qui permettent de le faire fonctionner, il peut être de l'ordre de 1000 tonnes.

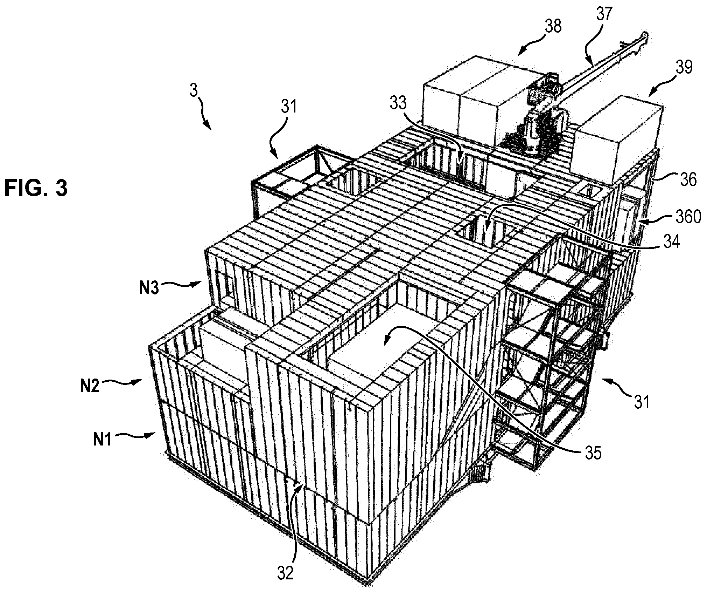

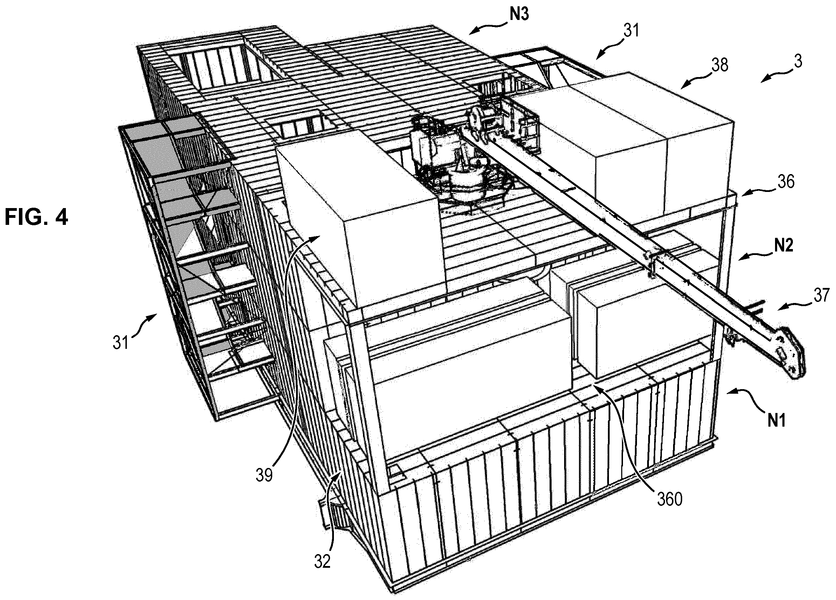

Le module des figures 3 et 4 est le même que celui de la figure 2. Toutefois, tel qu'il est représenté ici, il est équipé de matériels optionnels.

Ainsi, on note la présence d'un compensateur de réactif 35 (en anglais "shunt reactor"), qui a pour fonction de contrôler la tension d'un réseau électrique en compensant le comportement capacitif d'un réseau par son comportement inductif qui est placé sur la plateforme 32 précitée et est protégé par une palissade périphérique. On note également la présence en partie supérieure d'une trappe de maintenance qui est fermée en utilisation par un panneau non représenté. On note aussi, à l'extrémité opposée, la présence d'un toit 36 de protection de radiateurs 360.

Ce toit 36 sert de support pour un générateur électrique de secours 38 et un système de filtration des harmoniques 39.

On note la présence sur le support 37a d'une grue de levage 37 d'une capacité de levage adaptée aux besoins de la sous-station.

Avec de tels équipements optionnels, la forme et les dimensions de base du module 3 ne changent pas. Toutefois et encore à titre purement indicatif, son poids peut s'élever alors à 1200 tonnes.

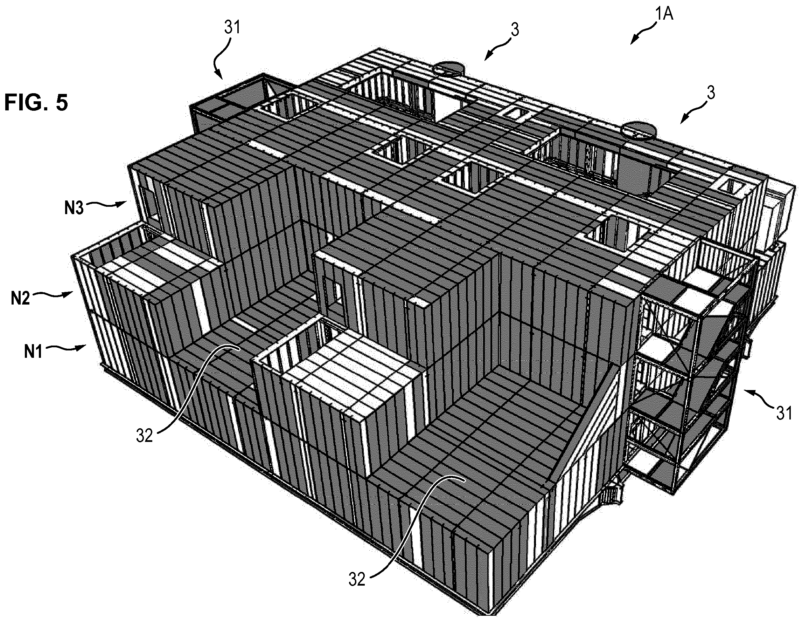

A la figure 5 est visible un mode de réalisation possible d'une sous-station électrique 1A conforme à l'invention.

Elle est ici constituée de deux modules 3 tels que celui de la figure 2. Ces modules sont identiques, au sens où ils présentent une forme et des dimensions extérieures identiques, mais aussi des éléments structurels identiques (ponts, cloisons, renforts, etc.), tant dans leurs agencements que dans leurs dimensionnements (nature/qualité des matériaux, épaisseurs, module d'inertie, etc.) nécessaires à la résistance structurelle de la sous-station.

Comme on le verra plus loin dans la description, chaque module renferme au moins un transformateur électrique configuré pour élever la tension de l'électricité produite par le champ d'éoliennes ou pour abaisser la tension provenant du réseau et permettant d'alimenter les éoliennes lors des périodes de maintenance.

Conformément à l'invention, ces modules sont reliés les uns aux autres de manière à être en mesure de fournir une puissance électrique globale égale à la somme des puissances de chaque transformateur. Ainsi, le nombre n de modules nécessaires est déterminé en fonction de la puissance unitaire (individuelle) de chacun des modules et de la puissance électrique globale recherchée.

Dans le cas d'espèce représenté ici, les deux modules 3 sont contigus. Dans un mode de réalisation différent, les modules pourraient ne pas être contigus mais au contraire séparés.

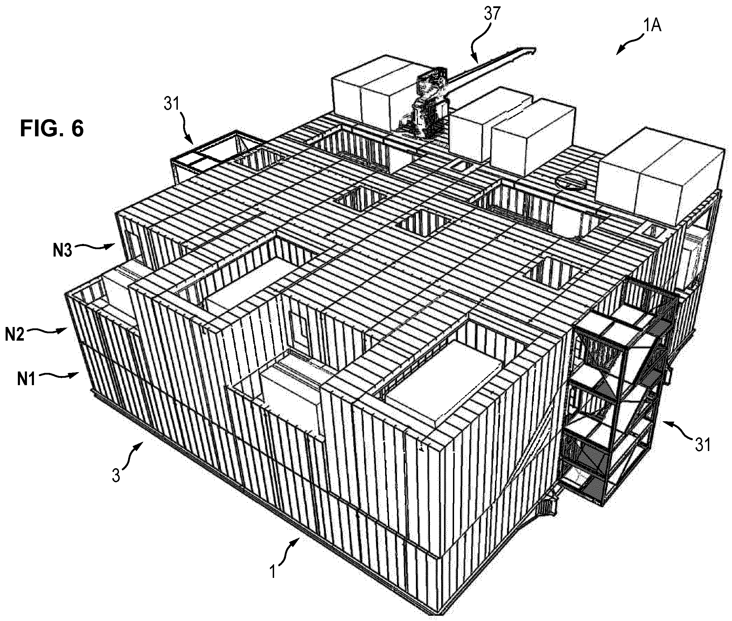

D'une manière analogue, la sous-station 1A représentée à la figure 6 est constituée de deux modules 3 tels que ceux de la figure 3, c'est à dire avec leurs matériels optionnels. On note toutefois la présence d'une seule grue 37. Mais si cela s'avère nécessaire, il peut être prévu une seconde grue sur le module 3 qui en est ici dépourvu.

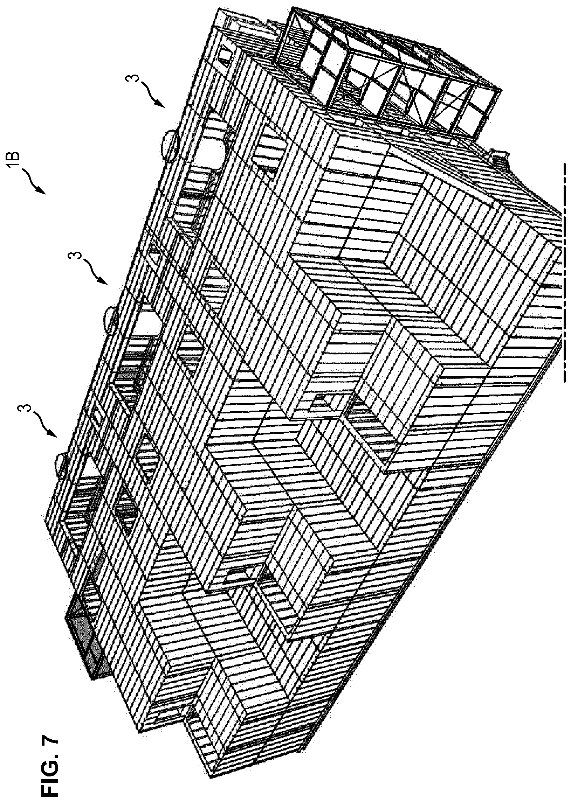

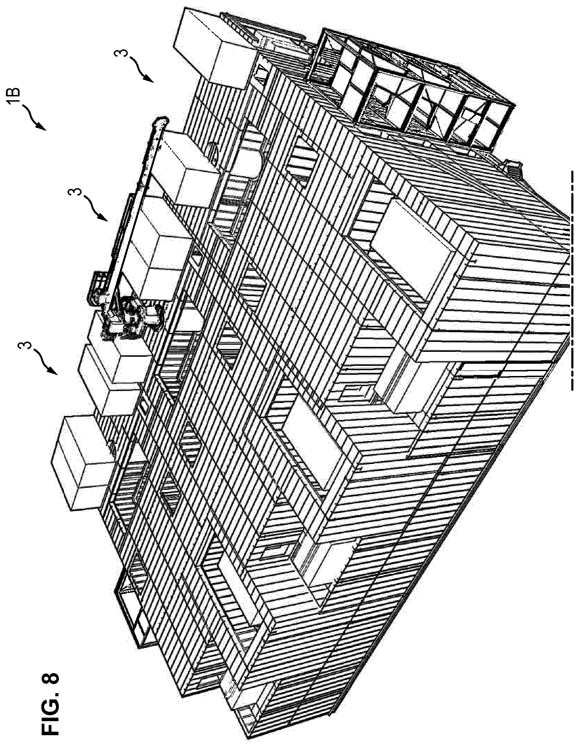

Aux figures 7 et 8 sont représentées deux stations analogues 1B formées de trois modules 3 identiques à ceux décrits précédemment.

Bien entendu, on peut envisager d'avoir un nombre supérieur de modules 3, mais cette situation n'a pas été représentée sur les figures pour ne pas les encombrer inutilement.

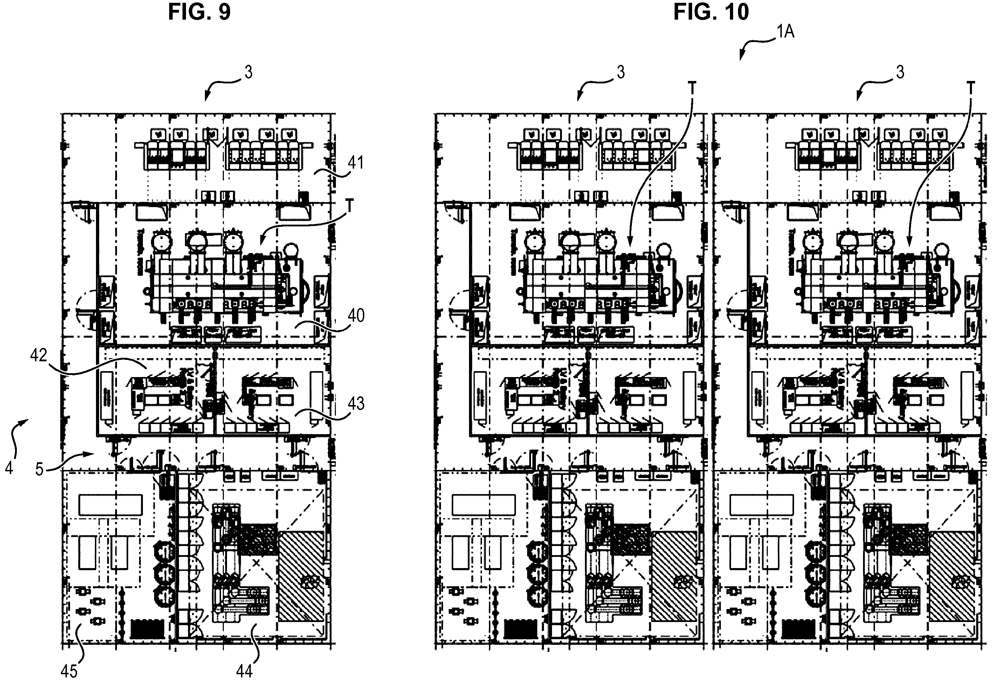

A la figure 9 est représenté schématiquement l'agencement 4 des pièces d'un module 3 tel que celui qui a été décrit précédemment.

A nouveau, il s'agit ici d'un exemple, de sorte que d'autres types d'aménagement peuvent être envisagés.

Ici est représenté seulement l'aménagement du niveau N1 précité.

On a donc affaire, en référence à la figure 9, à un ensemble de six pièces 40 à 45 desservies par un même couloir intérieur 5.

Le fait que ce couloir soit placé à l'intérieur du module permet aux opérateurs de circuler en toute sécurité d'une pièce à l'autre, sans avoir à ressortir à chaque fois du module.

Dans la configuration présentée, les pièces 40 à 45 ont les fonctions détaillées ci-après.

La pièce 40 accueille le transformateur T précité. Ce transformateur est relié à une partie des éoliennes du champ éolien.

La pièce 41 héberge un tableau blindé moyenne tension.

La pièce 42 héberge le système basse -tension.

La pièce 43 héberge un second système basse -tension redondant le premier.

La pièce 44 héberge un tableau blindé haute tension.

La pièce 45 est un local qui héberge le système de lutte contre les incendies et le système d'air conditionné.

La présence du transformateur T dans une pièce fermée permet d'augmenter notablement sa durée de vie, comparativement aux sous-stations connues dans lesquelles le transformateur, bien que protégé, est situé à l'extérieur et est donc soumis aux aléas climatiques.

A la figure 10 est représenté schématiquement l'agencement des pièces d'une sous-station 1A constituée de deux modules 3. A nouveau, la représentation se limite au niveau principal N1.

Avantageusement, cet agencement est strictement le même pour les deux modules 3. Dans ces conditions, la construction des modules 3 et l'aménagement de leur espace intérieur peut être rationnalisé.

Dans un mode de réalisation non représenté, les agencements des pièces d'un premier et d'un deuxième modules 3 sont inversés, de sorte que lorsqu'ils sont positionnés l'un à côté de l'autre, leurs pièces respectives sont symétriques,. Ainsi, cette configuration permet, le cas échéant, de mettre plus facilement en relation les pièces de même fonction qui appartiennent à ces deux modules différents.

Aux autres étages peuvent être prévues les locaux suivants :
- local de contrôle, de supervision et d'acquisition de données ;
- local pour un transformateur auxiliaire (c'est à dire de secours) et de mise à la terre ;
- local de groupe électrogène de secours ;
- refuge de sécurité ;
- atelier ;
- entrepôt.

Par ailleurs, sur le toit du niveau supérieur peuvent être prévus par exemple une zone d'hélitreuillage et un mât de radar.

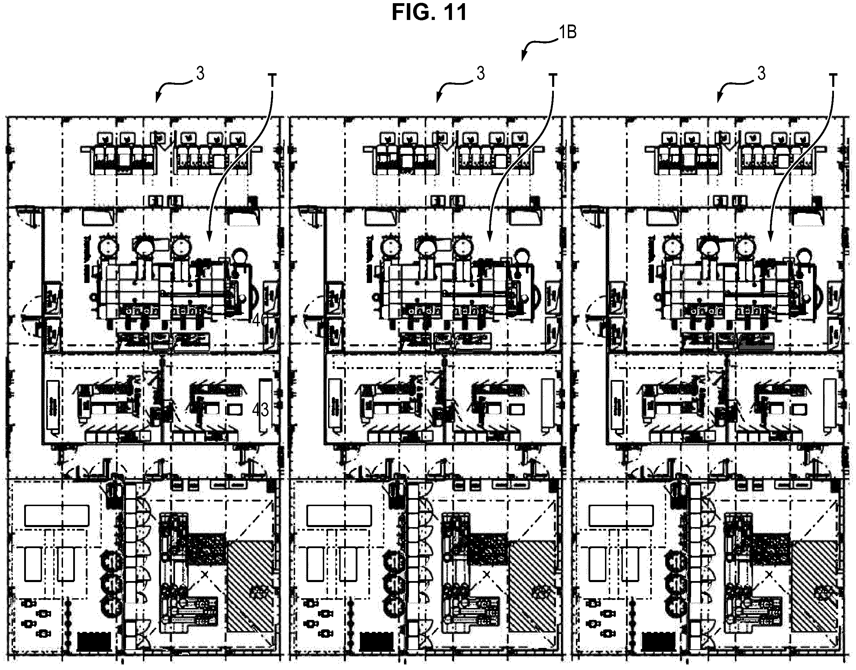

La figure 11 se différencie uniquement de la figure 10 par le fait que l'on a affaire à trois modules identiques 3.

Dans les sous-stations de l'invention, les transformateurs T présentent préférentiellement une puissance P identique. Toutefois, on peut envisager qu'au moins un transformateur présente une puissance différente de celle des autres transformateurs.

De plus, au moins un des modules peut être pourvu d'un transformateur T redondant, c'est à dire configuré pour être mis en service seulement en cas de défaillance du transformateur T de l'un des autres modules.

Comme déjà dit plus haut, la sous-station de l'invention est préférentiellement installée "offshore", c'est-à-dire au large des côtes, mais elle peut être installée "onshore", c'est-à-dire à terre.

Par ailleurs, les modules 3 de la sous-station sont avantageusement installés sur un même support, mais peuvent également être installés sur au moins deux supports.

Ainsi, au moins un module 3 de la sous-station peut être installé "onshore", c'est-à-dire à terre, tandis que l'autre (les autres) module(s) 3 est (sont) installé(s) offshore, c'est à dire au large des côtes.

Pour la mise en place sur un site "offshore" d'une sous-station conforme à l'invention, on peut bien entendu envisager de réaliser la liaison entre les modules 3 à terre et de transporter et d'installer l'ensemble de ces modules sur le site.

Mais on peut également envisager de transporter, et installer chacun des modules 3 individuellement et de procéder à leur liaison sur le site.

Avantageusement, chacun des modules 3 peut fournir une puissance comprise entre 150 et 400 MV et encore plus préférentiellement comprise entre 200 MW et 300 MW, ces modules, lorsqu'ils sont raccordés entre eux, formant un "module global" de plus forte puissance. Par exemple, il est possible d'obtenir une sous-station de 300 MW à 600 MW en connectant deux modules, une sous-station de 600 MW à 900 MW en connectant trois modules, etc.

Chaque module 3 (par exemple de 200 MW à 300 MW) est conçu pour pouvoir recevoir n'importe quel équipement électrique de la gamme en question. Ceci peut générer ponctuellement, pour la partie basse de la gamme, un surdimensionnement de la structure, celui-ci étant largement compensé par les gains réalisés sur l'ensemble du processus, notamment en études, en industrialisation, en fabrication et en installation. De plus ,chaque module 3 étant préalablement certifié, il est possible de gagner significativement sur le délai de fabrication (en études notamment) ce qui présente un avantage majeur pour les industriels exploitants qui cherchent systématiquement à réduire le délai entre le déclenchement de l'investissement et la mise en activité de l'installation, qui initie le retour sur investissement.

Le fait de faire usage de modules identiques permet de développer un processus de fabrication de série, qui est par définition plus performant en termes de coût, qualité et délai qu'un processus de fabrication d'une sous-station constituant un exemplaire unique. L'intégration d'équipements supplémentaires (propres aux conditions environnementales du champ éolien ou aux exigences spécifiques du donneur d'ordre) pouvant être prévue dès la conception et le développement de la fabrication sous forme d'options, leur intégration à chaque module est compatible avec la fabrication en série.

En termes de mise en place sur site, la solution selon l'invention permet également de s'adapter, en temps réel, aux moyens d'installation les moins coûteux disponibles sur le marché, en autorisant soit une liaison à terre ("onshore') des modules 3 (ce qui nécessite de recourir à un moyen de levage "offshore" lourd - par exemple 4 000 tonnes - mais avec un temps d'opération court), soit une liaison en mer ("offshore") des modules (ce qui nécessite de recourir à un moyen de levage moins lourd, mais avec un temps d'opération en mer plus long).

Bien entendu, dans l'ensemble de la présente demande y compris les revendications, on entend par "liaison des modules", "les modules sont reliés les uns aux autres "et autres expressions équivalentes, une liaison électrique ainsi que, éventuellement, une liaison mécanique suivant la disposition des modules dans le champ éolien.

## Revendications

1. Sous-station électrique (1A,1B,1C) de champ éolien, qui est configurée pour élever ou abaisser la tension de l'électricité produite par des éoliennes dudit champ éolien afin d'assurer son transport jusqu'à un réseau électrique de distribution,
**caractérisée par le fait qu'**elle comporte n modules (3), n étant un nombre entier au moins égal à 2, ces modules (3), qui comportent chacun un agencement de plusieurs pièces (40-45), présentant une forme et des dimensions extérieures identiques, chaque module (3) renfermant au moins un transformateur électrique (T) configuré pour élever ou abaisser ladite tension, ces modules (3) étant reliés les uns aux autres de manière à être en mesure de fournir audit réseau une puissance électrique globale égale à la somme des puissances de chaque transformateur (T).

2. Sous-station électrique (1A,1B,1C) selon la revendication 1, **caractérisée par le fait que** ledit agencement (4) est le même d'un module (3) à l'autre.

3. Sous-station électrique (1A,1B,1C) selon la revendication 1, **caractérisée par le fait que** les agencements d'un premier et d'un deuxième modules (3) sont inversés, de sorte que lorsqu'ils sont positionnés l'un à côté de l'autre, tout ou partie de leurs pièces (40-45) respectives sont symétriques.

4. Sous-station électrique (1A,1B,1C) selon l'une des revendications précédentes, **caractérisée par le fait que** chaque module (3) est également pourvu d'au moins un équipement de la liste suivante : un poste blindé haute ou moyenne tension (en anglais "Gas Insulated Switchgear"), un tableau d'alimentation à basse tension, un système de stockage d'énergie pour une alimentation électrique de secours, un système de refroidissement de l'air ambiant, un système de détection et de lutte contre l'incendie, un local de refuge.

5. Sous-station électrique (1A,1B,1C) selon l'une des revendications précédentes, **caractérisée par le fait que** la puissance P de chaque transformateur (T) est comprise entre 150 et 400 MW.

6. Sous-station électrique (1A,1B,1C) selon l'une des revendications précédentes, **caractérisée par le fait que** lesdits transformateurs (T) présentent une puissance P identique.

7. Sous-station électrique (1A,1B,1C) selon l'une des revendications 1 à 5, **caractérisée par le fait qu'**au moins un transformateur (T) présente une puissance différente de celle des autres transformateurs (T).

8. Sous-station électrique (1A,1B,1C) selon l'une des revendications précédentes, **caractérisée par le fait que** l'un desdits modules (3) est pourvu d'un transformateur (T) redondant, c'est à dire configuré pour être mis en service seulement en cas de défaillance du transformateur (T) de l'un des autres modules.

9. Installation qui comporte une pluralité d'éoliennes et au moins une sous-station (1A,1B,1C) selon l'une des revendications précédentes, **caractérisée par le fait que** ladite sous-station (1A,1B,1C) est installée "onshore", c'est-à-dire à terre.

10. Installation qui comporte une pluralité d'éoliennes et au moins une sous-station (1A,1B,1C) selon l'une des revendications 1 à 8, **caractérisée par le fait que** ladite sous-station (1A,1B,1C) est installée "offshore", c'est-à-dire au large des côtes.

11. Installation selon la revendication 10, **caractérisée par le fait que** ladite sous-station (1A,1B,1C) repose sur une fondation (2A,2B), sur un support flottant (2C), ou sur le fond marin.

12. Installation selon la revendication 11, **caractérisée par le fait que** ladite sous-station (1A,1B,1C) repose sur une fondation de type "jacket" ou monopile.

13. Installation selon l'une des revendications 10 à 12, **caractérisée par le fait que** les modules (3) de ladite sous-station (1A,1B,1C) sont installés sur un même support ou sur au moins deux supports.

14. Installation qui comporte une pluralité d'éoliennes et au moins une sous-station (1A,1B,1C) selon l'une des revendications 1 à 8, **caractérisée par le fait qu'**au moins un module (3) de ladite sous-station (1A,1B,1C) est installé "onshore", c'est-à-dire à terre, tandis que l'autre (les autres) module(s) (3) est (sont) installé(s) offshore, c'est à dire au large des côtes.

15. Procédé de mise en place sur un site "offshore" d'une sous-station (1A,1B,1C) selon l'une des revendications 1 à 8, **caractérisée par le fait que** l'on relie lesdits modules (3) à terre et que l'on transporte et installe l'ensemble de ces modules (3) sur ledit site.

16. Procédé de mise en place sur un site "offshore" d'une sous-station (1A,1B,1C) selon l'une des revendications 1 à 8, **caractérisée par le fait que** l'on transporte et installe chacun desdits modules (3) individuellement et que l'on procède à leur liaison sur ledit site.

## Patentansprüche

1. Elektrische Umspannstation (1A, 1B, 1C) eines Windparks, die ausgelegt ist, um die Spannung der von den Windkraftanlagen des Windparks erzeugten Elektrizität zu erhöhen oder zu senken, um ihren Transport bis zu einem elektrischen Verteilernetz zu gewährleisten,
**dadurch gekennzeichnet, dass** sie n Module (3) aufweist, wobei n eine ganze Zahl von mindestens gleich 2 ist, wobei diese Module (3), die jeweils eine Anordnung mehrerer Teile (40-45) aufweisen, eine Form und Außenabmessungen aufweisen, die identisch sind, wobei jedes Modul (3) mindestens einen elektrischen Transformator (T) umschließt, der ausgelegt ist, um die Spannung zu erhöhen oder zu senken, wobei diese Module (3) derart miteinander verbunden sind, dass sie in der Lage sind, dem Netz eine elektrische Gesamtleistung zu liefern, die gleich der Summe der Leistungen jedes Transformators (T) ist.

2. Elektrische Umspannstation (1A, 1B, 1C) nach Anspruch 1, **dadurch gekennzeichnet, dass** die Anordnung (4) von einem Modul (3) zum anderen gleich ist.

3. Elektrische Umspannstation (1A, 1B, 1C) nach Anspruch 1, **dadurch gekennzeichnet, dass** die Anordnungen eines ersten und eines zweiten Moduls (3) umgekehrt sind, so dass, wenn sie nebeneinander positioniert sind, alle oder ein Teil ihrer jeweiligen Teile (40-45) symmetrisch sind.

4. Elektrische Umspannstation (1A, 1B, 1C) nach einem der vorhergehenden Ansprüche, **dadurch gekennzeichnet, dass** jedes Modul (3) ebenfalls mit mindestens einer Ausstattung aus der folgenden Liste versehen ist: einer gasisolierten Hoch- oder Mittelspannungsstation (engl. "Gas Insulated Switchgear"), einer Niederspannungsschaltanlage, einem Energiespeichersystem für eine Notstromversorgung, einem System zur Kühlung der Umgebungsluft, einem Feuererkennungs- und -bekämpfungssystem, einem Schutzraum.

5. Elektrische Umspannstation (1A, 1B, 1C) nach einem der vorhergehenden Ansprüche, **dadurch gekennzeichnet, dass** die Leistung P jedes Transformators (T) zwischen 150 und 400 MW liegt.

6. Elektrische Umspannstation (1A, 1B, 1C) nach einem der vorhergehenden Ansprüche, **dadurch gekennzeichnet, dass** die Transformatoren (T) eine identische Leistung P aufweisen.

7. Elektrische Umspannstation (1A, 1B, 1C) nach einem der Ansprüche 1 bis 5, **dadurch gekennzeichnet, dass** mindestens ein Transformator (T) eine andere Leistung als die anderen Transformatoren (T) aufweist.

8. Elektrische Umspannstation (1A, 1B, 1C) nach einem der vorhergehenden Ansprüche, **dadurch gekennzeichnet, dass** eins der Module (3) mit einem redundanten Transformator (T) versehen ist, das heißt, der ausgelegt ist, dass er nur bei einem Ausfall des Transformators (T) eines der anderen Module in Betrieb genommen wird.

9. Anlage, die eine Vielzahl von Windkraftanlagen und mindestens eine Umspannstation (1A, 1B, 1C) nach einem der vorhergehenden Ansprüche aufweist, **dadurch gekennzeichnet, dass** die Umspannstation (1A, 1B, 1C) "onshore", das heißt an Land, installiert ist.

10. Anlage, die eine Vielzahl von Windkraftanlagen und mindestens eine Umspannstation (1A, 1B, 1C) nach einem der Ansprüche 1 bis 8 umfasst, **dadurch gekennzeichnet, dass** die Umspannstation (1A, 1B, 1C) "offshore", das heißt vor der Küste, installiert ist.

11. Anlage nach Anspruch 10, **dadurch gekennzeichnet, dass** die Umspannstation (1A, 1B, 1C) auf einem Fundament (2A, 2B), auf einem schwimmenden Träger (2C) oder auf dem Meeresboden steht.

12. Anlage nach Anspruch 11, **dadurch gekennzeichnet, dass** die Umspannstation (1A, 1B, 1C) auf einem Fundament vom Typ "Jacket" oder Monopile ruht.

13. Anlage nach einem der Ansprüche 10 bis 12, **dadurch gekennzeichnet, dass** die Module (3) der Umspannstation (1A, 1B, 1C) auf einem einzigen Träger oder auf mindestens zwei Trägern installiert sind.

14. Anlage, die eine Vielzahl von Windkraftanlagen und mindestens eine Umspannstation (1A, 1B, 1C) nach einem der Ansprüche 1 bis 8 aufweist, **dadurch gekennzeichnet, dass** mindestens ein Modul (3) der Umspannstation (1A, 1B, 1C) "onshore", das heißt an Land, installiert ist, während das andere Modul (die anderen Module) (3) "offshore", das heißt vor der Küste, installiert ist (sind).

15. Verfahren zum Aufstellen einer Umspannstation (1A, 1B, 1C) nach einem der Ansprüche 1 bis 8 an einem "Offshore"-Standort, **dadurch gekennzeichnet, dass** die Module (3) an Land verbunden werden und die Gesamtheit dieser Module (3) an den Standort transportiert und dort installiert wird.

16. Verfahren zum Aufstellen einer Umspannstation (1A, 1B, 1C) nach einem der Ansprüche 1 bis 8 an einem "Offshore"-Standort, **dadurch gekennzeichnet, dass** jedes dieser Module (3) einzeln transportiert und installiert wird und dass sie am Standort verbunden werden.

## Claims

1. An electrical sub-station for a wind farm (1A, 1B, 1C), which is configured to raise or lower the voltage of the electricity produced by wind turbines of said wind farm in order to ensure its conveyance to a distribution grid,
**characterized by** the fact that it includes n modules (3), n being an integer at least equal to 2, these modules (3), each including an arrangement (4) of several rooms (40-45), having identical shape and external dimensions, each module (3) containing at least one electrical transformer (T) configured to raise or lower said voltage, these modules (3) being connected to each other so as to be able to provide to said grid an overall electrical power equal to the sum of the powers of each transformer (T).

2. The electrical sub-station (1A, 1B, 1C) according to claim 1, **characterized by** the fact said arrangement (4) is the same from one module (3) to another.

3. The electrical sub-station (1A, 1B, 1C) according to claim 1, **characterized by** the fact that the arrangements of a first and a second module (3) are reversed so that, when positioned next to each other, all or part of their respective rooms (40-45) are symmetrical.

4. The electrical sub-station (1A, 1B, 1C) according to any of the preceding claims, **characterized by** the fact that each module (3) is also provided with at least one equipment from the following list: a high- or medium-voltage switchgear i.e. a Gas Insulated Switchgear, a low-voltage power supply board, an energy storage system for a backup power supply, an ambient air cooling system, a fire detection and firefighting system, shelter premises.

5. The electrical sub-station (1A, 1B, 1C) according to any of the preceding claims, **characterized by** the fact that the power P of each transformer (T) is comprised between 150 and 400 MW.

6. The electrical sub-station (1A, 1B, 1C) according to any of the preceding claims, **characterized by** the fact that said transformers (T) have an identical power P.

7. The electrical sub-station (1A, 1B, 1C) according to any of the claims 1 to 5, **characterized by** the fact that at least one transformer (T) has a different power from that of the other transformers (T).

8. The electrical sub-station (1A, 1B, 1C) according to any of the preceding claims, **characterized by** the fact that one of said modules (3) is provided with a redundant transformer (T), i.e. configured to be put into service only in case of failure of the transformer (T) of one of the other modules.

9. A facility which includes a plurality of wind turbines and at least one sub-station (1A, 1B, 1C) according to any of the preceding claims, **characterized by** the fact that said sub-station (1A, 1B, 1C) is installed onshore.

10. A facility which includes a plurality of wind turbines and at least one sub-station (1A, 1B, 1C) according to any of claims 1 to 8, **characterized by** the fact that said sub-station (1A, 1B, 1C) is installed offshore.

11. The facility according to claim 10, **characterized by** the fact said sub-station (1A, 1B, 1C) rests on a foundation (2A, 2B), on a floating support (2C) or on the seabed.

12. The facility according to claim 11, **characterized by** the fact said sub-station (1A, 1B, 1C) rests on a "jacket"-type foundation or monopile.

13. The facility according to any of claims 10 to 12, **characterized by** the fact that the modules (3) of said sub-station (1A, 1B, 1C) are installed on the same support or on at least two supports.

14. A facility which includes a plurality of wind turbines and at least one sub-station (1A, 1B, 1C) according to any of claims 1 to 8, **characterized by** the fact that at least one module (3) of said sub-station (1A, 1B, 1C) is installed onshore while the other module(s) (3) is/are installed offshore.

15. A method for setting up, on an offshore site, a sub-station (1A, 1B, 1C) according to any of claims 1 to 8, **characterized by** the fact that said modules (3) are connected onshore and that all of these modules (3) are transported and installed on said site.

16. A method for setting up, on an offshore site, a sub-station (1A, 1B, 1C) according to any of claims 1 to 8, **characterized by** the fact that each of said modules (3) is transported and installed individually and that the connection of these modules is carried out on said site.
